# EUROPEAN PATENT APPLICATION

(11) **EP 2 237 519 A1**
(43) Date of publication of application: **06.10.2010**
(21) Application number: 09305276.9
(22) Date of filing: 31.03.2009
(51) Int. Cl.: H04L 29/06

(54) **Method and system for securely linking digital user's data to an NFC application running on a terminal**

(71) Applicant: FRANCE TELECOM, 75015 Paris (FR)
(72) Inventor: Hernandez Martinez, Julian, 28041 Madrid (ES)

(57) **Abstract**

The invention relates to a method for securely linking at least one user digital data, proper to a user of a user terminal, to at least one near field communication (NFC) application running on said user terminal, said NFC application requiring an authentication of said user digital data when running on said user terminal.

According to the invention, the method comprises the acts of:
■ reading an identification number of an NFC chip associated to the said terminal;
■ generating a first hash from the NFC chip identification number and the user digital data, using a hash function proper to an NFC application issuer providing the NFC application;
■ saving on the user terminal the first hash,

wherein the first hash is usable to authenticate the user digital data by comparing said first hash to a second hash subsequently generated from the NFC chip identification number and user digital data stored on the user terminal using the hash function proper to the NFC application issuer.

## Description

### FIELD OF THE PRESENT INVENTION:

The present invention generally relates to secured contactless applications hosted on mobile phones and/or on electronic cards such as electronic transportation card (underground, bus, etc.) or additionally such as electronic passport, all requiring to highly secured digital users' data they have been hosting and that must be verified regularly.

### BACKGROUND OF THE PRESENT INVENTION:

Today, NFC (Near Field Communication) enabled mobile phones, with NFC chips and antennas, can host many contactless applications of many types, e.g. controlled access to buildings, public transport, fidelity cards, electronic cards, etc.

Indeed, NFC is a short-range high frequency wireless communication technology which enables the exchange of data between devices over about a 10 centimetres (- 4 inches) distance. The technology is a simple extension of the ISO 14443 proximity-card standard (contactless card, RFID) that combines the interface of a smartcard and a reader into a single device.

An NFC device can communicate with both existing ISO 14443 smartcards and readers, as well as with other NFC devices, and is thereby compatible with existing contactless infrastructure already in use for public transportation and payment. NFC is primarily aimed at present times in mobile phones, at three main use cases:
■ card emulation: the NFC device behaves like an existing contactless card reader mode: the NFC device is active and read a passive RFID tag, for example for interactive advertising ;
■ P2P mode: two NFC devices are communicating together and exchanging information. Many applications are possible, such as:
   - mobile ticketing in public transport - an extension of the existing contactless infrastructure;
   - mobile Payment - the device acts as a debit/ credit payment card;
■ smart poster - the mobile phone is used to read RFID (Radio-frequency identification) tags on outdoor billboards in order to get info on the move ;
■ Bluetooth pairing - in the future pairing of Bluetooth 2.1 devices with NFC support will be as easy as bringing them close together and accepting the pairing. The process of activating Bluetooth on both sides, searching, waiting, pairing and authorization will be replaced by a simple "touch" of the mobile phones.

Other applications in the future could include:
■ Electronic tickets - airline tickets, concert/event tickets, and others;
■ Electronic money;
■ Travel cards;
■ Identity documents;
■ Mobile commerce;
■ Electronic keys - car keys, house/office keys, and hotel room keys, etc.

More generally, NFC mobile phones are enabling services being usually supported by NFC cards, such as facility access card, rechargeable monthly bus tickets, electronic payment card, etc.

Most of such NFC cards generally embed a photo representing the NFC card's user, or other user's printed data forming input for user identification. Such data are used so that a third party, like a security access controller - in a bus controller, a merchant, etc. could verify the right match between the NFC card bearer identity and the identity of the card owner through a visual check between the on card printed photo, or other printed data contained with the card.

However, considering now the use of a NFC mobile phone embedding user digital data, such as a digital photo of the owner, for user identification, a visual check of a printed photo is no longer possible.

A major issue relative to NFC terminal with a capacity to embed digital data, such as an owner digital photo, forming input for NFC application running on the mobile phone or terminal, and dedicated to user/ owner identification, is to see these data modified or replaced for a fraudulent use.

Such a situation could arise after the lost (or theft) of a mobile phone or terminal embedding such digital data aiming at inter working with user identification controller or entity. Indeed, it would be quick easy with existing techniques to modify the user data, and more specifically the digital photo representing the user that is contained/ stored on the NFC mobile phone or terminal.

### SUMMARY OF THE PRESENT METHOD AND SYSTEM:

It is an objective of the present method and system to overcome disadvantages and/or make improvements other the prior art.

The following method/system will allow guaranteeing the linkage of a digitally stored personal data relative to the owner/ user in a memory of its NFC mobile phone or communication terminal (more generally), such as a photography and other associated data. e.g name, surname, passport number, biometric data as digitalized fingerprint, etc. - with a specific NFC application that is run on the terminal.

This will allow having a similar or higher third party verifiable mechanism. It will prevent and avoid mobile NFC applications fraudulent usages.

To that extend, the present relates to a method for securely linking at least one user digital data, proper to a user of a user terminal, to at least one near field communication (NFC) application running on said user terminal, said NFC application requiring an authentication of said user digital data when running on said user terminal.

According to the invention, the present method comprises advantageously the method comprises the acts of:
■ reading an identification number of an NFC chip associated to the said terminal;
■ generating a first hash from the NFC chip identification number and the user digital data, using a hash function proper to an NFC application issuer providing the NFC application;
■ saving on the user terminal the first hash,
wherein the first hash is usable to authenticate the user digital data by comparing said first hash to a second hash subsequently generated from the identification and user digital data stored on the user terminal using the hash function proper to the NFC application issuer.

This invention will allow using a NFC Mobile phone or terminal, to enable photo personalized NFC application running on said terminal, usually application like facilities access control, public transport cards, payment or credit cards usually requiring a printed photo of the owner in the plastic part of NFC card.

Such a method will then allow substituting the printed photo by a digital one that can not be replaced or altered, and that can be checked/ verified by authorized personnel, for instance a bus controller, etc.

With this method, a digital stored photo will be securely linked to the Mobile NFC application using a first hash generated document and whoever is authorized to check user's identity, will be able to verify the authenticity of the linked photo from this first hash document.

This method allow to guarantee the identity of the mobile NFC application user, the hash document being generated with user nominal information, regardless of data size (e.g. high definition photo(s), fingerprints, or even genetic code, such as DNA).

Moreover, another advantage of generating a first hash document is that the size of the hashed document will be minimized for storing into the dedicated memory of the NFC user terminal, which is particularly interesting when the user terminal is a NFC mobile phone with limited memory capacities, or if the hash document is stored inside NFC memory chip.

In a further embodiment of the invention, the method comprises a complementary act of storing the first hash in a dedicated memory of a server belonging to the said NFC application issuer.

Then, in case a reader aiming at generating a second hash file with a read NFC chip of a mobile phone and the read digital data (name, digital picture, etc.) belonging to the mobile phone user, this second hash file being generating for comparing with a first hash file stored in a memory of the mobile phone, then, the reader could request by the NFC application issuer a certified copy of the first hash document, for comparing with the first hash stored in the mobile phone memory.

The invention also relates to a method for authenticating at least one user digital data proper to a user of a user terminal, said authentication being required by one near field communication (NFC) application running on said terminal, said user terminal further comprising:
■ an NFC chip comprising an identification of said NFC chip,
■ the user digital data,
■ a first hash provided by an NCF application issuer of the NFC application prior to authentication, and generated from the NFC chip identification number and the user digital data using a hash function proper to said NFC application issuer;
the method comprising the acts of:
■ reading the identification of the NFC chip and the user digital data from the user terminal;
■ generating a second hash from the read identification and user digital data using the hash function proper to the NFC application issuer,
■ comparing the first hash read from the user terminal and the generated second hash to determine whether the user digital data has been modified after provision of the first hash.

This invention will allow having an easy and fast control of the first hash stored in an NFC mobile phone (or more generally communication terminal), by simply generating dynamically a second hash from the read identification and user digital data using the hash function proper to the NFC application issuer. Such a generating act could be done by an NFC reader, for example located in a bus for mobile ticketing, for authentifying the mobile phone owner and controlling the validity of the presented digital photo on the screen of its mobile phone.

The invention also relates to a system for securely linking at least one user digital data, proper to a user of a user terminal, to at least one near field communication (NFC) application running on said user terminal, said NFC application requiring an authentication of said user digital data when running on said user terminal, said system comprising:
■ means for reading an identification number of an NFC chip associated to the said terminal;
■ means for generating a first hash from the NFC chip identification number and the user digital data, using a hash function proper to an NFC application issuer providing the NFC application;
■ means for saving on the user terminal the first hash;
wherein the first hash is usable to authenticate the user digital data by comparing by means for comparing said first hash to a second hash subsequently generated from the identification and user digital data stored on the user terminal using the hash function proper to the NFC application issuer.

In a further embodiment of the invention, the NFC terminal comprises a memory zone for storing the said first hash.

The invention also relates to a system for authenticating at least one user digital data proper to a user of a user terminal, said authentication being required by one near field communication (NFC) application running on said terminal, said user terminal further comprising:
■ an NFC chip comprising an identification of said NFC chip,
■ the user digital data,
■ a first hash provided by an NCF application issuer of the NFC application prior to authentication, and generated from the NFC chip identification number and the user digital data using a hash function proper to said NFC application issuer;
the system comprising:
■ means for reading the identification of the NFC chip and the user digital data from the user terminal;
■ means for generating a second hash from the read identification and user digital data using the hash function proper to the NFC application issuer,
■ means for comparing the first hash read from the user terminal and the generated second hash to determine whether the user digital data has been modified after provision of the first hash.

The invention also deals with a near field communication (NFC) reader in system for authenticating at least one user digital data proper to a user of a user terminal, said authentication being required by one near field communication (NFC) application running on said terminal, said user terminal further comprising:
■ an NFC chip comprising an identification of said NFC chip,
■ the user digital data,
■ a first hash provided by an NCF application issuer of the NFC application prior to authentication, and generated from the NFC chip identification number and the user digital data using a hash function proper to said NFC application issuer;
the NFC reader comprising:
■ means for reading the identification of the NFC chip and the user digital data from the user terminal;
■ means for generating a second hash from the read identification and user digital data using the hash function proper to the NFC application issuer,
■ means for comparing the first hash read from the user terminal and the generated second hash to determine whether the user digital data has been modified after provision of the first hash.

The invention also relates to a computer readable carrier including computer program instructions that cause a computer to implement a method as the one previously described and aiming at securely linking at least one user digital data, proper to a user of a user terminal, to at least one near field communication (NFC) application running on said user terminal, said NFC application requiring an authentication of said user digital data when running on said user terminal, said method comprising the acts of:
■ reading an identification number of an NFC chip associated to the said terminal;
■ generating a first hash from the NFC chip identification number and the user digital data, using a hash function proper to an NFC application issuer providing the NFC application;
■ saving on the user terminal the first hash,
wherein the first hash is usable to authenticate the user digital data by comparing said first hash to a second hash subsequently generated from the identification and user digital data stored on the user terminal using the hash function proper to the NFC application issuer.

The invention finally relates to a computer readable carrier including computer program instructions that cause a computer to implement a method as the one previously described and aiming at authenticating at least one user digital data proper to a user of a user terminal, said authentication being required by one near field communication (NFC) application running on said terminal, said user terminal further comprising:
■ an NFC chip comprising an identification of said NFC chip,
■ the user digital data,
■ a first hash provided by an NCF application issuer of the NFC application prior to authentication, and generated from the NFC chip identification number and the user digital data using a hash function proper to said NFC application issuer;
the method comprising the acts of:
■ reading the identification of the NFC chip and the user digital data from the user terminal;
■ generating a second hash from the read identification and user digital data using the hash function proper to the NFC application issuer,
■ comparing the first hash read from the user terminal and the generated second hash to determine whether the user digital data has been modified after provision of the first hash.

### BRIEF DESCRIPTION OF THE DRAWINGS

The present system and method are explained in further detail, and by way of example, with reference to the accompanying drawings wherein:
FIG. 1 shows an illustration of an embodiment of the system for securely linking at least one digital data proper to a user of a terminal, namely user digital data, the said terminal running at least one NFC application requiring for its execution a control of the said user digital data.
FIG. 2 gives an illustration of one possible embodiment of a system aiming at verifying that digital information proper to a user of an NFC terminal is validly linked to an NFC application running on this NFC terminal.
FIG. 3 shows a flow diagram illustrating an embodiment of the present method for securely linking at least one digital data proper to a user of a terminal, namely user digital data, the said terminal running at least one NFC application requiring for its execution a control of the said user digital data.
FIG. 4 shows a flow diagram illustrating an embodiment of a method for verifying that digital information proper to a user of an NFC terminal is validly linked to an NFC application running on this NFC terminal.

### DETAILED DESCRIPTION OF THE PREFERRED EMBODIMENTS:

The following are descriptions of exemplary embodiments that when taken in conjunction with the drawings will demonstrate the above noted features and advantages, and introduce further ones.

In the following description, for purpose of explanation rather than limitation, specific details are set forth such as architecture, interfaces, techniques, etc., for illustration.

However, it will be apparent to that ordinary skill in the art that other embodiments that depart from these details would still be understood to be within the scope of the appended claims.

It should also be expressly understood that the drawings are included for illustrative purposes and do not represent the scope of the present system.

With NFC applications running on an NFC mobile phone or terminal, there is no more plastic card where a photo can be printed, such printed photo being now directly stored under a digital format in a memory of the NFC mobile phone or terminal. Thus, there is a need to link such a digital photo to the NFC application, to be sure that the stored digital photo is the one originally associated to the NFC application in relation with a specific user of the NFC application when a control will be required.

As previously mentioned, the invention provides a method guaranteeing the linkage between a digital photo and more generally digital data, such as other associated digital data, e.g. - securely linking name, surname, passport number, biometric data as digitalized fingerprint, genetic code - DNA, etc.) stored in a mobile phone/ terminal memory, with a predefined NFC application running on this terminal.

This will allow having a similar or higher third party verification mechanism. It will prevent and avoid mobile NFC applications fraudulent usages.

The digital photo, and all other nominal digital information proper to the owner of a mobile terminal running at least one NFC application, may be stored in the phone memory in a dedicated memory area.

Such photo will be part of the identification elements of Mobile NFC application user. This digital photo, together with other user nominal data, e.g. name, surname, NFC Card identification number, application identifying, national identity card number (or, passport number), etc. will be associated in a digital document, namely User Identity Document (UIDoc) in the following. Such a document could adopt different formats, for instance, an XML (for "eXtensible Markup Language").

This Digital Document, UIDoc is hashed (univocal summary), with a well know algorithms, (e.g. SHA-1, SHA-2, etc.) and a UIDoc hash sum will be signed using PKI (asymmetric key algorithms).

The UIDoc hash sum will be signed by an NFC application issuer providing the NFC application running on the mobile user terminal, using a ciphering method which will take into account a private key proper to the NFC application issuer.

The previously signed hash of UIDoc will be stored in a dedicated memory of the NFC terminal. The NFC application is them personalized. It will be associated for control to a digitally signed univocal summary (hash) of a digital photo, name, surname, NFC Card ID Number, etc.

Whoever has to verify that the mobile NFC application belongs to the person carrying the terminal (e.g. a security guard or inspector) will access to, and read, the UIDoc associated to a specific NFC application running on this user terminal, reading it from the phone or terminal dedicated memory, then displaying the digital photo and/or the other associated nominal data proper to the user, on the terminal screen for verification.

The controller would get the UIDoc file, make the hash sum using the same hashing algorithm (e.g. SHA-1, SHA-2) as the one previously used by the NFC application issuer for hashing the UIDoc digital document, for getting the signed corresponding hash sum. The signed hashed document will be deciphered using the NFC application issuer public key and before being checked to validate the matching among the signed hash sum stored in the Mobile NFC memory and the hash sum result ofUIDoc hashing performed by the security guard or controller.

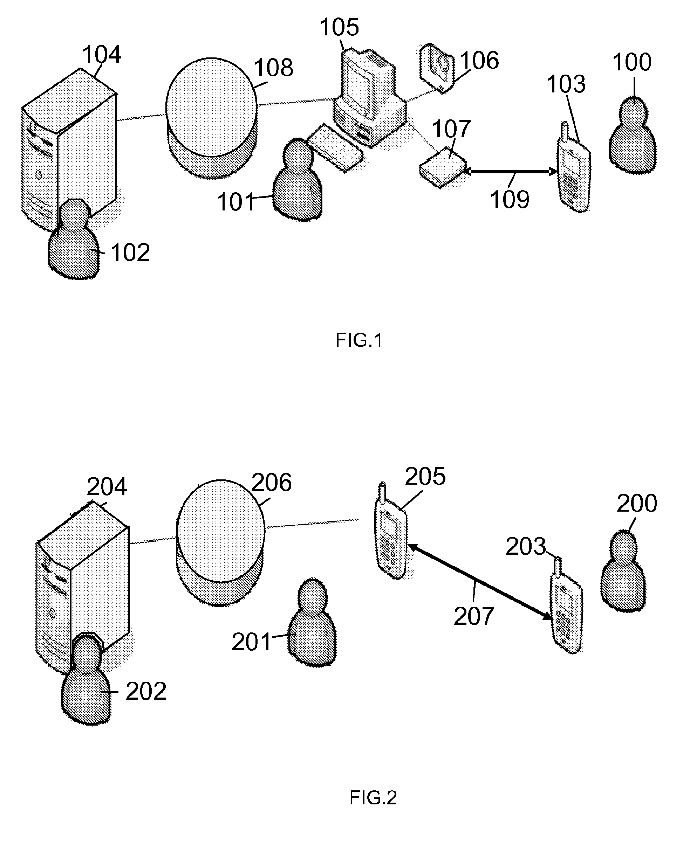

FIG.1 illustrates an exemplary embodiment of the present system for securely linking digital data with an NFC application running on a user terminal. This system may comprise elements such as: a User 100, an Application Issuer Representative 101 (e.g. the person or party in charge of issuing NFC mobile facility access, security responsible), an Application Issuer 102 (e.g. the company or organization) providing an NFC application running on the User terminal 103 of User 100, illustrated hereafter as a mobile phone. The User terminal 103 embeds an NFC chip that runs at least one NFC application provided by at least one NFC application issuer 102 operatively coupled to an NFC application platform 104, such a PKI type of platform.

The NFC application issuer representative 101 uses a computer terminal 105 that could be linked to a digital camera 106. This computer terminal 105 is linked to an NFC reader or coupler 107 having a short range communication interface 109 for communication with NFC user terminal(s) 103.

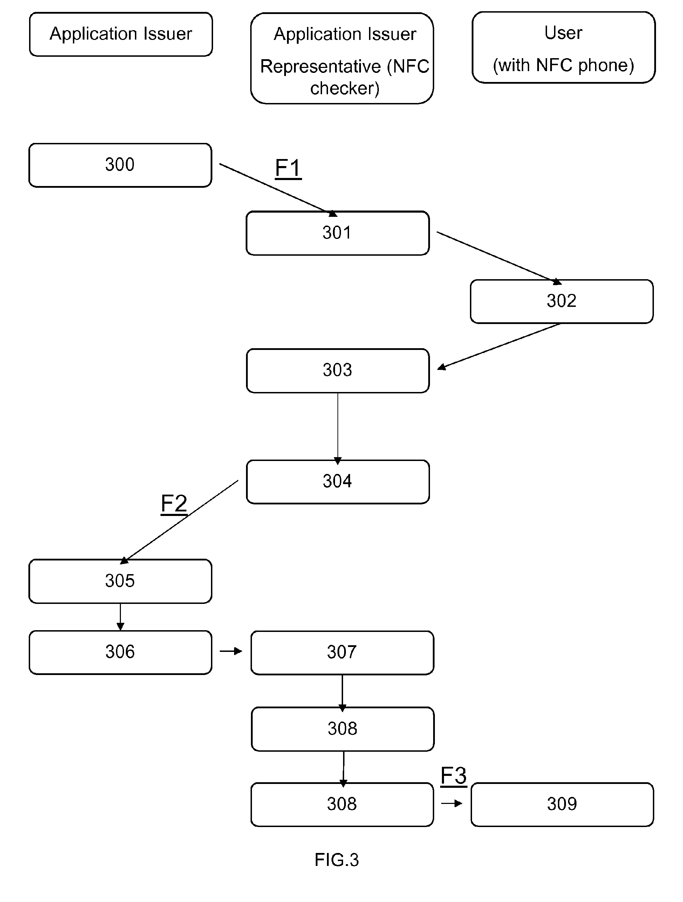

Complementary with FIG.3, we describe one possible embodiment of the method according to the invention, in association with the aforementioned elements from the present system.

First, when a user subscribes to an NFC service provided by an NFC application issuer, a first step for the NFC application issuer consists in creating in a preliminary act 300 a specific digital document, namely UIDoc file in the following description, with at least one User nominal or personal information, such as name, surname, national identity number, memory path, etc.

This UIDoc file is then transfer (arrow F1) to an NFC application issuer representative (NFC Checker for instance) in a further act 301.

Subsequently, the User will locate its NFC mobile phone 103 close to an NFC reader 107 belonging to the Application issuer representative 101, so that the Application issuer representative 101 can access and read in the subsequent act 302 the NFC identification number of the NFC chip which is embedded into the user NFC terminal 103.

The application issuer representative may take, a digital photo of the user, before completing the UIDoc file with the digital photo of the User, and when needed with other digital data, proper to the user 100. Alternatively, the digital data may be provided through digital transmission. It can be certified (in an act 303) in some ways by the NFC application issuer.

The application issuer representative 101 will encrypt UIDoc file with NFC application issuer's private key (for secure transmission in an act 304), before sending (arrow F2) it to the application issuer NFC application platform 104 of the NFC application issuer 102, using a communication network 103 (for instance Internet or an over the air communication channel).

Once the NFC application issuer 102 has receive the encrypted UIDoc, it will decipher it with its private key to check in a further act 305 that the user identity matches the user nominal data fulfilled into the UIDoc document, before saving the NFC chip identification number into the said UIDoc file. Then, it will make a hash in an act 306 (using a SHA-1 or SHA-2 hashing method, for instance), before encrypting the hashed document using an application issuer private key for signing -ciphering- the hashed UIDoc. This document is then encrypted (act 307) using the application issuer representative public key (for secure transmission), before being sent to the computer terminal 105 of the application issuer representative 101. The application issuer representative then receives (arrow F3) the UIDoc hash file, deciphers it using its own private key (act 308), and before transferring for storing thereon (act 309) the encrypted hash of the UIDoc and the original UIDoc file in a dedicated memory of the user terminal 103, using the NFC coupler/ reader 107 (or others short range communication path/channel, e.g. Bluetooth, IrDA,etc-) and the short range communication radio interface 109 for communicating with the user terminal 103.

Thus, when a user is requested to authenticate himself through his user terminal, the NFC application will cause the mobile phone to show the photo. The person who wants to check that this photo is the one linked to the Mobile NFC card/application can request the UIDoc (for instance an XML document), perform the hashing method, and verify this hash match with the public deciphered hash stored on the NFC terminal memory.

The defined method will allow an on-line Mobile NFC card issuing, with photo and other personal data linkage, for user authentication. As the UIDoc File can not be replaced, modified, the present method will avoid its fraud. If the UIDoc hash file is modified or changed, the apparatus will detect it. The UIDoc hash sum could be stored in the NFC card memory and will only be readable by authorized NFC readers that know the right NFC passwords.

The inclusion of NFC card identification number info in the UIDoc file makes impossible to replace both, UIDoc file in the phone memory and UIDoc signed hash on the Mobile NFC card memory, because only the Application Issuer representative will compose, complete UIDoc file and only Application Issuer will be able to sign the hash.

This method will also allow reusing a NFC Mobile phone to allocate photo personalized NFC application, or even to renew photo (or other linked data). It also will avoid the need of making printed card to support photo.

This invention will allow using a NFC Mobile phone to allocate photo personalized NFC application, usually application like facilities access control, public transport cards, payment or credit cards that normally require a printed photo of the owner in the plastic part of NFC card. This will allow substituting the printed photo by a digital one that can not be replaced and that can be checked/ verified by an authorized personnel or party.

This method allow to guarantee the identity of the Mobile NFC application user, the UIDoc file can have many user's intrinsic information regardless of data size (e.g high definition photo(s), fingerprints, or event DNA code) because in the Mobile NFC memory only a ciphered hash sum is going to be stored. The NFC memory size is limited (usually 1Kb or 4 Kb), but the phone memory is not limited, so with a minimum usage of NFC Memory data storage we can assure the authenticity of many user information we consider for the application.

With this method, a digital stored photo will be linked to the Mobile NFC application and whoever is authorized to check user's identity, will be able to verify the authenticity of the linked photo.

Thus, in relation with FIG.2 describing another exemplary embodiment of the present system for checking and controlling the validity of the nominal data proper to a user 200 which are linked with an NFC application running on a user terminal 203, an NFC application checker has an NFC reader 205 having first a short range communication interface 207 for communicating with the user terminal 203 and, second a communication interface for communicating through a communication network 206, with an NFC application platform 204 belonging to the NFC application issuer 202 providing the said NFC application running on the user terminal 203.

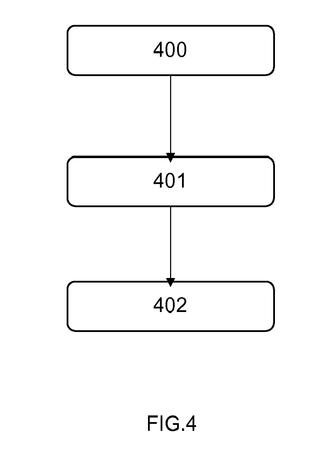

In relation with FIG.4, we describes the main acts of the method for authenticating at least one user digital data proper to a user of a user terminal, said authentication being required by one near field communication (NFC) application running on said terminal, said user terminal further comprising:
■ an NFC chip comprising an identification of said NFC chip,
■ the user digital data,
■ a first hash provided by an NCF application issuer of the NFC application prior to authentication, and generated from the NFC chip identification number and the user digital data using a hash function proper to said NFC application issuer.
According to the invention, the method comprising the acts of:
■ reading 400 the identification of the NFC chip and the user digital data from the user terminal;
■ generating 401 a second hash from the read identification and user digital data using the hash function proper to the NFC application issuer,
■ comparing 402 the first hash read from the user terminal and the generated second hash to determine whether the user digital data has been modified after provision of the first hash.

Thus, this invention will allow to use a NFC Mobile phone to allocate photo personalized NFC application, usually application like facilities access control, yearly public transport cards, payment or credit cards include a printed photo of the owner in the plastic part of NFC card, this will allow to substitute the printed photo by a digital one that can not be replaced and that can be checked/verified by authorized personnel.

With such a method, a digital stored photo will be linked to the Mobile NFC application and whoever is authorized to check user's identity, will be able to verify the authenticity of the linked photo.

Such a method will then allow substituting the printed photo by a digital one that can not be replaced or altered, and that can be checked/ verified by authorized personnel, for instance a bus controller, etc.

With this method, a digital stored photo will be securely linked to the Mobile NFC application using a first hash generated document and whoever is authorized to check user's identity, will be able to verify the authenticity of the linked photo from this first hash document.

## Claims

1. A method for securely linking at least one user digital data, proper to a user of a user terminal, to at least one near field communication (NFC) application running on said user terminal, said NFC application requiring an authentication of said user digital data when running on said user terminal, said method comprising the acts of:
■ reading an identification number of an NFC chip associated to the said terminal;
■ generating a first hash from the NFC chip identification number and the user digital data, using a hash function proper to an NFC application issuer providing the NFC application;
■ saving on the user terminal the first hash,
wherein the first hash is usable to authenticate the user digital data by comparing said first hash to a second hash subsequently generated from the NFC chip identification number and user digital data stored on the user terminal using the hash function proper to the NFC application issuer.

2. The method of claim 1, wherein in comprises a complementary act of storing the first hash in a dedicated memory of a server belonging to the said NFC application issuer.

3. A method for authenticating at least one user digital data proper to a user of a user terminal, said authentication being required by one near field communication (NFC) application running on said terminal, said user terminal further comprising:
■ an NFC chip comprising an identification of said NFC chip,
■ the user digital data,
■ a first hash provided by an NCF application issuer of the NFC application prior to authentication, and generated from the NFC chip identification number and the user digital data using a hash function proper to said NFC application issuer;
the method comprising the acts of:
■ reading the identification of the NFC chip and the user digital data from the user terminal;
■ generating a second hash from the read identification and user digital data using the hash function proper to the NFC application issuer,
■ comparing the first hash read from the user terminal and the generated second hash to determine whether the user digital data has been modified after provision of the first hash.

4. A system for securely linking at least one user digital data, proper to a user of a user terminal, to at least one near field communication (NFC) application running on said user terminal, said NFC application requiring an authentication of said user digital data when running on said user terminal, said system comprising:
■ means for reading an identification number of an NFC chip associated to the said terminal;
■ means for generating a first hash from the NFC chip identification number and the user digital data, using a hash function proper to an NFC application issuer providing the NFC application;
■ means for saving on the user terminal the first hash;
wherein the first hash is usable to authenticate the user digital data by comparing by means for comparing said first hash to a second hash subsequently generated from the identification and user digital data stored on the user terminal using the hash function proper to the NFC application issuer.

5. The system of claim 4, wherein the said NFC terminal comprises a memory zone for storing the said first hash.

6. A system for authenticating at least one user digital data proper to a user of a user terminal, said authentication being required by one near field communication (NFC) application running on said terminal, said user terminal further comprising:
■ an NFC chip comprising an identification of said NFC chip,
■ the user digital data,
■ a first hash provided by an NCF application issuer of the NFC application prior to authentication, and generated from the NFC chip identification number and the user digital data using a hash function proper to said NFC application issuer;
the system comprising:
■ means for reading the identification of the NFC chip and the user digital data from the user terminal;
■ means for generating a second hash from the read identification and user digital data using the hash function proper to the NFC application issuer,
■ means for comparing the first hash read from the user terminal and the generated second hash to determine whether the user digital data has been modified after provision of the first hash.

7. A near field communication (NFC) reader in system for authenticating at least one user digital data proper to a user of a user terminal, said authentication being required by one near field communication (NFC) application running on said terminal, said user terminal further comprising:
■ an NFC chip comprising an identification of said NFC chip,
■ the user digital data,
■ a first hash provided by an NCF application issuer of the NFC application prior to authentication, and generated from the NFC chip identification number and the user digital data using a hash function proper to said NFC application issuer;
the NFC reader comprising:
■ means for reading the identification of the NFC chip and the user digital data from the user terminal;
■ means for generating a second hash from the read identification and user digital data using the hash function proper to the NFC application issuer,
■ means for comparing the first hash read from the user terminal and the generated second hash to determine whether the user digital data has been modified after provision of the first hash.

8. A computer readable carrier including computer program instructions that cause a computer to implement a method according to claims 1 to 2, for securely linking at least one user digital data, proper to a user of a user terminal, to at least one near field communication (NFC) application running on said user terminal, said NFC application requiring an authentication of said user digital data when running on said user terminal, said method comprising the acts of:
■ reading an identification number of an NFC chip associated to the said terminal;
■ generating a first hash from the NFC chip identification number and the user digital data, using a hash function proper to an NFC application issuer providing the NFC application;
■ saving on the user terminal the first hash,
wherein the first hash is usable to authenticate the user digital data by comparing said first hash to a second hash subsequently generated from the identification and user digital data stored on the user terminal using the hash function proper to the NFC application issuer.

9. A computer readable carrier including computer program instructions that cause a computer to implement a method according to claim 3, for authenticating at least one user digital data proper to a user of a user terminal, said authentication being required by one near field communication (NFC) application running on said terminal, said user terminal further comprising:
■ an NFC chip comprising an identification of said NFC chip,
■ the user digital data,
■ a first hash provided by an NCF application issuer of the NFC application prior to authentication, and generated from the NFC chip identification number and the user digital data using a hash function proper to said NFC application issuer;
the method comprising the acts of:
■ reading the identification of the NFC chip and the user digital data from the user terminal;
■ generating a second hash from the read identification and user digital data using the hash function proper to the NFC application issuer,
■ comparing the first hash read from the user terminal and the generated second hash to determine whether the user digital data has been modified after provision of the first hash.
